# NEW EUROPEAN PATENT SPECIFICATION

(11) **EP 0 387 950 B2**
(45) Date of publication and mention of the opposition decision: **03.12.1997**
(45) Mention of the grant of the patent: 29.06.1994
(21) Application number: 90200558.6
(22) Date of filing: 08.03.1990
(51) Int. Cl.: B01D 1/18, A23L 3/40, B01J 2/04

(54) **Spray drying apparatus; method for preparation of a spray-dried product having a desired bulk density**
Sprühtrocknungsvorrichtung, Verfahren zur Herstellung eines Sprühtrocknungsproduktes mit einer bestimmten Schüttdichte
Dispositif de séchage par pulvérisation; procédé de préparation d'un produit ayant une densité apparente désirée obtenu par séchage par pulvérisation

(30) Priority: 13.03.1989 NL 8900598
(43) Date of publication of application: 19.09.1990
(73) Proprietor: STORK FRIESLAND B.V., 8401 DT Gorredijk (NL)
(72) Inventor: Boersen, Antonius Cornelus, NL-2182 VG Hillegom (NL)
(74) Representative: Barendregt, Frank, Drs.

(56) References cited:
- NL-A- 8 602 952
- US-A- 3 621 902
- K. Masters, Spray Drying Handbook, 1985, p. 355 and 585

## Description

The invention first relates to an apparatus for the preparation of a foam spray-dried product at least comprising a housing and a nozzle situated therein, in which the nozzle connects to a conduit for supplying liquid comprising at least one of the ingredients of the end product and a supply of pressurized gas being connected to said conduit and means are provided to feed a stream of gas comprising a dry particulate material to the jet of droplets issued by the nozzle concerned.

Such an apparatus is known from US-A-3.615.723. In said publication a spray drying apparatus is described in which to facilitate the drying operation and to reduce the density of the finished product the liquid which is fed to the nozzle may be supplied with air or any suitable gas. The thus formed droplets expand under influence of the gas present and are subsequently brought into contact with a dry particulate material in order to form agglomerates between the still moist expanded droplets and the dry particulate material.

The axis of the jet of moist expanded droplets and the jet of dry particulate material are substantially perpendicular to each other. The agglomerated dried product obtained in this way will show non-uniform properties which is undesirable.

The present invention has an object to provide an apparatus of the above indicated type with which it is possible to prepare a very uniform product.

A further object of the present invention is to provide an apparatus with which a uniform product may be prepared which additionally enables to prepare a product of any desired bulk density.

The apparatus of the type described is in order to achieve above objects characterized as indicated in claim 1.

It has been found that by feeding-in the dry particulate material in a stream which extends around the nozzle a very uniform product may be obtained of which the particles comprise a dry material in expanded state of the liquid supplied to the nozzle and the dry particulate material which has been fed into a stream surrounding the nozzle.

In particular the nozzle is situated substantially in the plane of the end of said tube whereby an open area of ring form is present between the outer circumference of said nozzle and the inner circumference of said tube.

The relative positions of the end of the tube and the nozzle can be varied; advantageously to that end the nozzle may be moved along the axis of the tube ending in the housing.

It has been established that with advantage the ratio between the diameter of the inner circumference of said tube and the outer circumference of said nozzle is between 1.5 and 5.

Preferably the ratio between the diameter of the tube and the diameter of the nozzle is between 0.5 and 2.5 and most preferably said ratio is about 2.

With respect to the invention further NL-A-86 02952 of applicant is mentioned. In said publication a device is described for the preparation of a free flowing fat-comprising product to which a lecithin comprising substance is added. This known device comprises three spray nozzles for fat-comprising concentrate and lecithin comprising substance respectively. Around the supply conduit of the nozzle for the lecithin comprising substance a jacket is arranged through which an air-flow is fed comprising recirculating particles of a fine fraction of spray-dried product. The latter assembly of nozzle and jacket shows resemblance with a part of the device according to the invention.

Said publication does not comprise information about the use of such assembly in a device for the preparation of a foam-spray-dried product in which, apart from an element which shows resemblance to said assembly, means are provided for the dosed supply of product to be sprayed, pressurized and/or liquefied gas and dry particulate material.

With advantage the apparatus according to the invention as described hereinbefore comprises one or more of the following additional devices:
a. A fluid bed which connects to the outlet of the housing of the apparatus having at least a part in which turbulent mixing conditions exist.
b. A powder collection unit, such as a filter, or cyclone with which it is possible to separate fines which may be recirculated to the stream of dry particulate material which is fed into the stream around the nozzle.
c. Means for extracting entrained particles from within the housing which may also be fed into the stream of dry particulate material which is supplied around the nozzle to agglomerate with the expanded droplets of material in wet state issued by the nozzle.

In order to supply the liquid to be sprayed which contains a gas, such as for example carbon dioxide, in a dissolved state preferably heat exchanger is present in the conduit for supplying liquid comprising at least one of the ingredients of the product.

With such a heat exchanger it is possible to adjust the temperature of the solution which contains at least one of the ingredients and dissolved or dispersed gas.

The invention also relates to a method of preparation of a foam spray-dried product according to claim 7

By using the with respect to the invention's device described dosing means for liquid having at least one of the components of the end product; foaming gas and dry particulate material the bulk density of the spray-dried product is adjustable at wish. The range of bulk density adjustment comprises the bulk density of the foamed dry substance from the supplied liquid to the bulk density of the dry particulate material.

It has been found that by feeding-in a stream of gas comprising dry particulate material in a ring form whereby said stream is made to collide with the jet of droplets issued by the nozzle it is possible to obtain a very uniform agglomerated material; by adjustment of the ratio between the amount of dry particulate material and the amount of solution which is fed to the nozzle it has been found possible to achieve a bulk density of the end product which has a predetermined desired value.

In particular an optimal agglomeration is achieved by use of a spraying pressure between 20 and 400 bar, preferably between 50 and 150 bar, whereas a velocity of the gas stream in ring form in the vicinity of the nozzle is at most 20 m/sec, preferably between 6 and 12 m/sec.

In experiments it has been observed that the velocity of the air which is carrying the dry components expediently will be not too high; if this is the case the dry particles will pass through the spray mist and not agglomerate. The end product will be insufficiently agglomerated in such case.

It has been found that the air velocity in the vicinity of the nozzle has to be maximally 20 m/sec at normal operation and preferably lower than 12 m/sec. The air-cooled housing having therein arranged the nozzle therefore has to be given accurately determined dimensions as indicated hereinbefore.

The dry particulate material may be chosen from dry ingredients constituting the remainder of the end product ingredients in not foamed condition; fines obtained after drying of the agglomerated product and classifying such as sieving, and recirculated particles which are entrained in the upward gas stream inside the housing or combinations thereof.

In general the particulate material will be composed of all three of above-mentioned possible constituents, whereby in any case the dry particulate material in not foamed condition is present.

It is to be noted that the above indicated dry ingredients constituting the remainder of the end product ingredients of course can also be equal to the product ingredients. In other words a foam spray-dried product may be prepared by spraying a liquid comprising an ingredient in dissolved state and by feeding-in as dry particulate material a dry product which is identical to the product which is present in the liquid to be sprayed in dissolved state.

Optionally the product obtained after removing of the fines may be conditioned in, for example, a packed bed to lower the moisture content to a desired degree.

The apparatus and method according to the invention are in particular useful to prepare particles consisting of hollow spheres comprising dry particulate material, whereby the dry particles internally or externally are connected to the hollow spheres.

The products may be obtained in any desired density between a low density corresponding to the density of the foamed product having no dry ingredients incorporated and a high density of the dry component in not foamed condition.

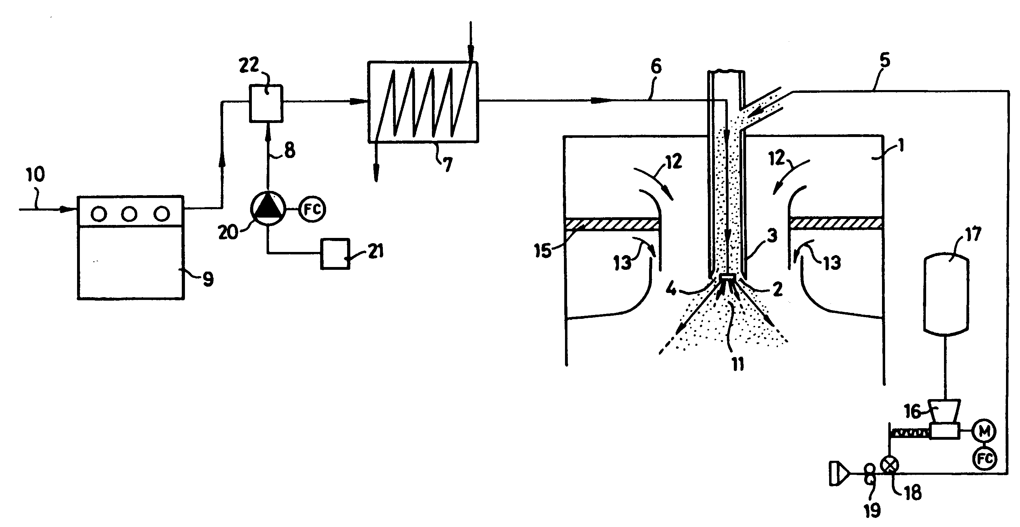

The invention now will be illustrated by means of the drawing having one single figure which shows an apparatus for preparation of a spray-dried product according to the invention.

In the figure a housing is indicated by reference number 1 which housing accommodates a nozzle 2 and a tube 3 ending inside said housing. The tube is arranged such that the tube end encloses the nozzle; the nozzle is arranged such that it is centered around the axis of the tube 3 whereas the nozzle lies in the plane in which also the end of the tube 3 within the housing is situated adjustable. To achieve an optimal uniformity of the product the nozzle 2 is mounted adjustably. The nozzle may move along the axis of tube 3. To the tube 3 is fed a stream 5 of dry particulate material. To the nozzle is fed a solution of material to be spray-dried, to which liquid at 8 a stream of compressed gas such as CO₂ or N₂ is fed. The solution which is under pressure is heated in heat exchanger 7 to a temperature which is desired for the spraying operation in the nozzle. With 9 a high pressure pump is schematically indicated whereas the supply of liquid which at least contains one of the ingredients of the end product is indicated with 10. The nozzle 2 ejects a jet 11 of expanded droplets of the liquid fed to the nozzle 2 to which a stream of dry particulate material 5 collides which is supplied via the opening 4 of ringform which is present between the outer circumference of the nozzle 2 and the inner circumference of the tube 3.

Dosing of dry particulate material via conduit 5 may be achieved with use of a pneumatic pressurized air system 19 to which with use of a dosing unit 16 for dry powder a desired quantity of dry powder is supplied via a lock system 18.

Dosing of the gas used for foaming, such as for example CO₂ is carried out with a dosing unit 20 from a storage vessel 21. The gas-flow 8 is with use of an impregnating and mixing unit 22 combined with the flow of concentrate from the high pressure pump 9 to which the liquid 10 to be sprayed is fed.

In the drawing is indicated that the housing 1 comprises only one nozzle 2 and one tube 3. In order to increase the capacity of the apparatus of course a suitable housing can accommodate more than one assembly of a nozzle and a surrounding tube. In the figure a partition wall 15 is indicated which forms a division between the hot gas stream 12 coming from the top of the housing via an opening not shown and a stream of cold air 13 which enters the housing via an opening that has neither been shown. The stream of cold air 13 has as a purpose to cool the roof of the housing 1. The volume flow of cold air generally is only a fraction of the volume flow of hot air.

The invention will now be illustrated with a number of not limiting examples wherein all percentages are weight percentages unless indicated otherwise.

### EXAMPLE I

A 67% solution of sucrose is mixed with CO₂ and sprayed under pressure in a device according to the invention. The sprayed solution volume is kept constant. Crystalline sucrose is dosed accurately as a dry powder. The bulk density of the end product may be adjusted as desired with use of the ratio of the solids weight of the solution and the weight of crystalline sucrose which are fed in per unit of time.

The bulk density of crystalline sucrose is 700 g/l. Per kg sucrose-solution 3,5 g CO₂ is added.

| Fraction sucrose-solids in solution % | Fraction crystalline sucrose % | Bulk density (100 taps) g/l |
|---|---|---|
| 99,5 | 0,5 | 180 ± 10 |
| 70 | 30 | 320 ± 10 |
| 65 | 35 | 350 ± 10 |
| 30 | 70 | 590 ± 10 |

### EXAMPLE II

A mixture of a plant-extract and a fat-comprising creamer is partly foam-spray-dried and partly added in dry form to the device according to the invention. The end product bulk density is adjusted by adjusting the weight ratio between the two components. The solids content of the solution was 55%; per kg solution 11 g CO₂ is added.

| Fraction solution solids % | Fraction solids dry material % | Bulk density (100 taps) g/l |
|---|---|---|
| 99 | 1 | 150 ± 10 |
| 38 | 62 | 380 ± 10 |
| 22 | 78 | 410 ± 10 |
| Bulk density solids: 515 g/l. | | |

### EXAMPLE III

A solution of 52% malto dextrine is sprayed under foaming with a fixed quantity of 4,5 g CO₂ per kg solution. Crystalline lactose was fed to the spray zone as a dry powder.

The bulk density of the end product may be adjusted as follows:

| Fraction solution solids % malto dextrine | Fraction solids dry lactose % | Bulk density (100 taps) g/l |
|---|---|---|
| 99 | 1 | 100 ± 10 |
| 75 | 25 | 110 ± 10 |
| 50 | 50 | 210 ± 10 |
| 25 | 75 | 310 ± 10 |
| Bulk density crystalline lactose: 700 g/l. | | |

In all examples the air speed in the gas flow of ring form around the nozzle was about 9 m/sec.

In the first example an experiment was included to check the influence of the air speed around the nozzle.

| Fraction solution solids sucrose % | Fraction dry sucrose % | V air m/sec | Bulk density product g/l | Fraction product % <315 µm |
|---|---|---|---|---|
| 80 | 20 | 8,5 | 275 ± 10 | 20 |
| 80 | 20 | 14 | 315 ± 10 | 55 |

Herefrom appears that at an air speed higher than the preferred range of 6-12 m/sec as indicated the dry particles pass the spray and do not agglomerate sufficiently. This leads to an increase in bulk density and an increase of the fraction of particles having a dimension < 315µm.

## Claims

1. Apparatus for the preparation of a foam spray-dried product at least comprising a housing (1) and a nozzle (2) situated therein, in which the nozzle (2) connects to a conduit (6) for supplying liquid comprising at least one of the ingredients of the end product and a supply of pressurized gas and/or liquefied gas being connected to said conduit, the connection of the supply of pressurized gas and/or liquefied gas to the conduit (6) being upstream the connection of the conduit (6) to the nozzle (2) and means are provided to feed a stream (5) of gas comprising dry particulate material to the jet of droplets issued by the nozzle concerned, whereby the housing (1) is provided with a tube (3) for feeding in said stream (5) of gas comprising dry particulate material; said tube (3) ending inside the housing (1) and said nozzle (2) being arranged near the end of said tube (3) whereby the projection of the tube (3) in the direction of the axis of the tube is surrounding the projection of the nozzle (2) in the same direction, while means (9;20,21;16,18) are present for the dosed supply of liquid, gas to be supplied to that liquid, and dry particulate material comprising at least particulate material in not foamed condition.

2. Apparatus according to Claim 1, **characterized in that** the nozzle (2) is sutuated substantially in the plane of the end of said tube (3) whereby an open area (4) of ring form is present between the outer circumference of said nozzle (2) and the inner circumference of said tube (3).

3. Apparatus according to Claim 2, **characterized in that** the ratio between the cross-section of the inner circumference of said tube (3) and the outer circumference of said nozzle (2) is between 1.5 and 5.

4. Apparatus according to Claim 3, **characterized in that** said ratio is between 1.5 and 2.5.

5. Apparatus according to one or more of the Claims 1-4, **characterized in that** means are provided to extract entrained particles from within the housing (1) and to feed these particles to the stream (5) of gas which is fed to the tube which ends in the housing (1) to form part of the dry particulate material contained in said stream (5).

6. Apparatus according to one or more of the foregoing Claims, **characterized in that** a heat exchanger (7) is included in the conduit (6) for supplying liquid comprising at least one of the ingredients of the product.

7. Method of preparation of a foam spray-dried product in which a solution of at least one of the ingredients of the product is fed to a nozzle (2) within a housing (1) whereby a pressurized gas is fed to said solution in a process step preceding the feeding of said solution to the nozzle (2) to cause a foaming of said solution leaving the nozzle as a jet of droplets and whereby a stream (5) of gas comprising dry particulate material is fed to the jet of droplets, whereby the stream (5) of gas comprising dry particulate material comprising at least particulate material in not foamed condition is made to collide with the jet (11) of droplets issued by the nozzle (2) and whereby at least at the intersection of said stream and said jet (11) of droplets the cross-section of said stream has a ring form whereby the axis of the jet of droplets is substantially perpendicular to the plane of such ring and wherein the ratio between the amount of dry particulate material and the amount of solution fed to the nozzle is adjusted to achieve a desired bulk density for the spray-dried product.

8. Method according to Claim 7, **characterized in that** in order to achieve an optimal agglomeration between the droplets leaving the nozzle (2) and the dry particulate material of the gas stream of ring form a spraying pressure between 20 and 400 bar is used and a velocity of the gas stream of ring form in the vicinity of the nozzle (2) of at most 20 m/sec.

9. Method according to Claim 8, **characterized in that** a spraying pressure is used between 50 and 150 bar and a velocity of the gas stream of ring form between 6 and 12 m/sec.

10. Method according to Claims 7-9, **characterized in that** the dry particulate material at least comprises dry ingredients constituting the remainder of the end product in not foamed condition and further is chosen from fines obtained after drying in a fluidized bed, of which bed at least a part is in a turbulent condition, and classifying, and recirculated particles which are entrained in the upward gas stream inside the housing.

11. Method according to one or more of the foregoing Claims, **characterized in that** the product, after sieving out the fines is conditioned in a packed bed to lower the moisture content to a desired degree.

## Patentansprüche

1. Vorrichtung zur Herstellung eines schaumsprühgetrockneten Erzeugnisses, mindestens umfassend ein Gehäuse (1) und eine darin gelegene Düse (2), bei der die Düse (2) an eine Leitung (6) zum Zuführen einer Flüssigkeit angeschlossen ist, welche mindestens einen der Bestandteile des Fertigerzeugnisses enthält, und wobei eine Versorgung mit unter Druck stehendem Gas und/oder verflüssigtem Gas an die besagte Leitung angeschlossen ist, wobei sich der Anschluß der Versorgung mit unter Druck stehendem Gas und/oder verflüssigtem Gas an der Leitung (6) in Strömungsrichtung vor dem Anschluß der Leitung (6) an der Düse (2) befindet, und Mittel vorgesehen sind, um dem von der betreffenden Düse abgegebenen Tröpfchenstrahl einen Gasstrom (5) zuzuführen, der ein trockenes Teilchenmaterial enthält, wobei das Gehäuse (1) mit einem Rohr (3) zum Einbringen des besagten, trockenes Teilchenmaterial enthaltenden Gasstroms (5) versehen ist; wobei das besagte Rohr (3) innerhalb des Gehäuses (1) endet, und die besagte Düse (2) nahe dem Ende des besagten Rohrs (3) angeordnet ist, wodurch der Überstand des Rohrs (3) in Richtung der Achse des Rohrs den Überstand der Düse (2) in derselben Richtung umgibt, während Mittel (9;20,21;16,18) zur dosierten Zufuhr von Flüssigkeit, Gas, das dieser Flüssigkeit zugeführt werden soll, und trockenem Teilchenmaterial, das zumindest Teilchenmaterial in ungeschäumtem Zustand enthält, vorhanden sind.

2. Vorrichtung nach Anspruch 1, **dadurch gekennzeichnet,** daß die Düse (2) im wesentlichen in der Ebene des Endes des besagten Rohrs (3) gelegen ist, womit eine offene Fläche (4) von Ringform zwischen dem äußeren Umfang der besagten Düse (2) und dem inneren Umfang des besagten Rohrs (3) vorhanden ist.

3. Vorrichtung nach Anspruch 2, **dadurch gekennzeichnet,** daß das Verhältnis zwischen dem Querschnitt des inneren Umfangs des besagten Rohrs (3) und des äußeren Umfangs der besagten Düse (2) zwischen 1,5 und 5 beträgt.

4. Vorrichtung nach Anspruch 3, **dadurch gekennzeichnet,** daß das besagte Verhältnis zwischen 1,5 und 2,5 beträgt.

5. Vorrichtung nach einem oder mehreren der Ansprüche 1 bis 4, **dadurch gekennzeichnet,** daß Mittel vorgesehen sind, um mitgerissene Teilchen von innerhalb des Gehäuses (1) abzuziehen, und diese Teilchen dem Gasstrom (5) zuzuführen, der dem Rohr zugeführt wird, welches im Gehäuse (1) endet, so daß sie einen Teil des trockenen Teilchenmaterials bilden, das in dem besagten Strom (5) enthalten ist.

6. Vorrichtung nach einem oder mehreren der vorangehenden Ansprüche, **dadurch gekennzeichnet,** daß in der Leitung (6) zum Zuführen von Flüssigkeit, die mindestens einen der Bestandteile des Erzeugnisses enthält, ein Wärmetauscher (7) enthalten ist.

7. Verfahren zur Herstellung eines schaumsprühgetrockneten Erzeugnisses, bei dem eine Lösung mindestens eines der Bestandteile des Erzeugnisses einer Düse (2) innerhalb eines Gehäuses (1) zugeführt wird, wobei ein unter Druck stehendes Gas der besagten Lösung in einem Verfahrensschritt zugeführt wird, welcher dem Zuführen der besagten Lösung zur Düse (2) vorangeht, um ein Aufschäumen der besagten Lösung zu bewirken, welche die Düse als ein Tröpfchenstrahl verläßt, und wobei dem Tröpfchenstrahl ein Gasstrom (5) zugeführt wird, der trockenes Teilchenmaterial enthält, wobei bewirkt wird, daß der trockenes Teilchenmaterial, das zumindest Teilchenmaterial in ungeschäumtem Zustand enthält, enthaltende Gasstrom (5) mit dem von der Düse (2) abgegebenen Tröpfchenstrahl (11) kollidiert, und wobei mindestens an der Schnittstelle des besagten Stroms und des besagten Tröpfchenstrahls (11) der Querschnitt des besagten Stroms eine Ringform aufweist, wobei die Achse des Tröpfchenstrahls im wesentlichen senkrecht zur Ebene eines derartigen Rings ist, und wobei das Verhältnis zwischen der Menge an trockenem Teilchenmaterial und der Menge Lösung, die der Düse zugeführt wird, eingestellt wird, um für das sprühgetrocknete Erzeugnis ein gewünschtes Schüttgewicht zu erzielen.

8. Verfahren nach Anspruch 7, **dadurch gekennzeichnet,** daß ein Sprühdruck zwischen 20 und 400 bar und eine Geschwindigkeit des ringförmigen Gasstroms in der Nähe der Düse (2) von höchstens 20 m/s verwendet wird, um eine optimale Agglomeration zwischen den die Düse (2) verlassenden Tröpfchen und dem trockenen Teilchenmaterial des ringförmigen Gasstroms zu erzielen.

9. Verfahren nach Anspruch 8, **dadurch gekennzeichnet,** daß ein Sprühdruck zwischen 50 und 150 bar und eine Geschwindigkeit des ringförmigen Gasstroms zwischen 6 und 12 m/s verwendet wird.

10. Verfahren nach den Ansprüchen 7 bis 9, **dadurch gekennzeichnet,** daß das trockene Teilchenmaterial mindestens trockene Bestandteile enthält, die den Rest des Fertigerzeugnisses in ungeschäumtem Zustand bilden, und weiter aus Feinanteilen, die man nach Trocknen in einem Wirbelbett, von dem sich mindestens ein Teil in einem turbulenten Zustand befindet, und Klassieren erhält, und zurückgeführten Teilchen, die in dem aufwärtsgerichteten Gasstrom innerhalb des Gehäuses mitgerissen werden, ausgewählt wird.

11. Verfahren nach einem oder mehreren der vorangehenden Ansprüche, **dadurch gekennzeichnet,** daß das Erzeugnis nach einem Aussieben der Feinanteile in einem Festbett konditioniert wird, um den Feuchtigkeitsgehalt auf einen gewünschten Grad zu verringern.

## Revendications

1. Dispositif pour la préparation d'un produit écumé séché par pulvérisation, comprenant au moins un boîtier (1) et une buse (2) située dans celui-ci, dans lequel la buse (2) est reliée à un conduit (6) d'alimentation en liquide contenant au moins un des ingrédients du produit fini et une source de gaz sous pression et/ou de gaz liquéfié étant reliée audit conduit, la liaison entre la source de gaz sous pression et/ou de gaz liquéfié et le conduit (6) se trouvant en amont de la liaison entre le conduit (6) et la buse (2), et des moyens étant prévus pour acheminer un courant (5) de gaz contenant des matières particulaires sèches jusqu'au jet de gouttelettes sortant de la buse concernée, le boitier (1) contenant un tube (3) pour introduire ledit courant (5) de gaz contenant des matières particulaires sèches, ledit tube (3) se terminant à l'intérieur du boîtier (1) et ladite buse (2) étant disposée près de l'extrémité dudit tube (3), grâce à quoi la projection du tube (3) dans le sens de l'axe du tube entoure la projection de la buse (2) dans le même sens, tandis que des moyens (9 ; 20, 21 ; 16, 18) sont présents, permettant l'apport dosé de gaz liquide dans ce liquide et cette matière particulaire sèche comprenant au moins des matières particulaires non écumées.

2. Dispositif selon la revendication 1,
caractérisé en ce que la buse (2) se trouve sensiblement dans le plan de l'extrémité dudit tube (3), grâce à quoi une zone ouverte (4) de forme annulaire est présente entre le pourtour extérieur de ladite buse (2) et le pourtour intérieur dudit tube (3).

3. Dispositif selon la revendication 2,
caractérisé en ce que le rapport entre la section transversale du pourtour intérieur dudit tube (3) et le pourtour extérieur de ladite buse (2) est compris entre 1,5 et 5.

4. Dispositif selon la revendication 3,
caractérisé en ce que ledit rapport est compris entre 1,5 et 2,5.

5. Dispositif selon au moins une des revendications 1 à 4,
caractérisé en ce que des moyens sont présents pour extraire de l'intérieur du boîtier (1) des particules entraînées et pour acheminer ces particules jusqu'au courant gazeux (5) qui est appliqué au tube se terminant dans le boîtier (1) afin de faire partie de la matière particulaire sèche contenue dans ledit courant (5).

6. Dispositif selon au moins une des revendications précédentes,
caractérisé en ce qu'un échangeur (7) de chaleur est présent dans le conduit (6) pour fournir un liquide contenant au moins un des ingrédients du produit.

7. Procédé de préparation d'un produit écumé séché par pulvérisation, dans lequel une solution d'au moins un des ingrédients du produit est acheminée jusqu'à une buse (2) à l'intérieur d'un boîtier (1), grâce à quoi un gaz sous pression est acheminé dans ladite solution au cours d'une étape du procédé qui précède l'acheminement de ladite solution jusqu'à la buse (2), pour provoquer une écumation de ladite solution sortant de la buse sous la forme d'un jet de gouttelettes, et grâce à quoi un courant (5) de gaz contenant de la matière particulaire sèche est acheminé jusqu'au jet de gouttelettes,
grâce à quoi, le courant de gaz (5) contenant de la matière particulaire sèche comprenant au moins de la matière particulaire non écumée est amené à heurter le jet (11) de gouttelettes sortant de la buse (2), et grâce à quoi, au moins à l'intersection dudit courant et dudit jet (11) de gouttelettes, la section transversale dudit courant a une forme annulaire, grâce à quoi l'axe du jet de gouttelettes est sensiblement perpendiculaire au plan de cet anneau, et dans lequel le rapport entre la quantité de matière particulaire sèche et la quantité de solution acheminée jusqu'à la buse est ajusté de façon à obtenir une densité en vrac voulue pour le produit séché par pulvérisation.

8. Procédé selon la revendication 7,
caractérisé en ce que, afin d'obtenir une agglomération optimale entre les gouttelettes sortant de la buse (2) et la matière particulaire sèche de courant gazeux de forme annulaire, on utilise une pression de pulvérisation comprise entre 20 et 400 bars et une vitesse du courant gazeux de forme annulaire au voisinage de la buse (2) qui est au maximum de 20 m/s.

9. Procédé selon la revendication 8,
caractérisé en ce qu'on utilise une pression de pulvérisation comprise entre 50 et 150 bars et une vitesse de courant gazeux de forme annulaire comprise entre 6 et 12 m/s.

10. Procédé selon les revendications 7 à 9,
caractérisé en ce que la matière particulaire sèche contient au moins des ingrédients secs constituant le reste du produit fini à l'état non écumé et, en outre, est choisie parmi des particules fines obtenues après séchage dans un lit fluidisé, au moins une partie dudit lit étant à l'état turbulent, et après une classification, et des particules recyclées entraînées dans le courant gazeux ascendant à l'intérieur du boîtier.

11. Procédé selon au moins une des revendications précédentes,
caractérisé en ce que le produit, après avoir été séparé des particules fines par tamisage, est conditionné sous la forme d'un lit tassé afin de réduire dans une mesure voulue la teneur en humidité.
